# EUROPEAN PATENT SPECIFICATION

(11) **EP 1 624 592 B1**
(45) Date of publication and mention of the grant of the patent: **21.05.2008**
(21) Application number: 05004922.0
(22) Date of filing: 07.03.2005
(51) Int. Cl.: H04B 10/00

(54) **Optical lan device and method for detecting abnormality in optical lan**
Optische-LAN Vorrichtung und Verfahren zur Fehlererkennung in einer optischen-LAN Vorrichtung
Dispositif pour réseau optique local et procédé de détection d'anomalies dans un dispositif pour réseau optique local

(30) Priority: 02.08.2004 JP 2004225757
(43) Date of publication of application: 08.02.2006
(73) Proprietor: Pacific Industrial Co., Ltd., Ogaki-shi, Gifu-ken 503-8603 (JP)
(72) Inventor: Kawase, Shinichi, Ogaki-shi, Gifu-ken 503-8603 (JP); Okubo, Youichi, Ogaki-shi, Gifu-ken 503-8603 (JP); Katou, Michiya, Ogaki-shi, Gifu-ken 503-8603 (JP)
(74) Representative: Geyer, Fehners & Partner

(56) References cited:
- EP-A- 0 779 718
- US-A- 6 088 141

## Description

The present invention relates to optical LAN devices according to the preamble of claim 1, the device including a master node and a plurality of slave nodes that are interconnected with optical fiber cables for configuring a network, and, more specifically, to techniques for suppressing a network from going down due to decrease in the light intensity of a light transmitting element provided in each node. The present invention also relates to a method for detecting abnormality in an optical LAN device according to the preamble of claim 5.

A ring type optical LAN device, which is one form of the optical LAN device, includes a master node and a plurality of slave nodes that are interconnected with optical fiber cables for configuring a network. Each slave node is connected to a load device. In the ring type optical LAN device, optical signals sent to the network from the master node returns to the master node after circulating all the slave nodes. That is, the master node and the slave nodes each include a light transmitting element for generating optical signals and a light receiving element for receiving the optical signals. An optical signal transmitted from the light transmitting element of the master node is received by the light receiving element of the next slave node. In the same manner, the optical signal transmitted from the light transmitting element of the slave node is received by the light receiving element of the next slave node. Furthermore, the optical signal transmitted from the light transmitting element of the last slave node is received by the light receiving element of the master node. If any one of the light transmitting elements of the master node and the slave nodes malfunctions, the optical signal transmitted from that node becomes abnormal. Thus, command data will not be properly transmitted from the master node to the slave nodes. Further, return data indicating the operating state of the load device will not be properly transmitted to the master node from each slave node.

As for the technique for detecting the abnormality of the light transmitting element of each node, an optical transmission device is disclosed in Japanese Laid-Open Patent Publication No. 5-327024. That is, the optical transmission device includes a light transmitting element driving circuit and a light transmitting element, which modulates the intensity of the optical signal in response to the output level from the light transmitting element driving circuit. The optical transmission device also includes a separator, which separates a part of optical output of the light transmitting element, a photosensitive element, which receives light separated by the separator, an optical level determining device, which determines whether the output average level of the photosensitive element is normal, and a light output stopping circuit, which stops light emission of the light transmitting element upon receipt of a signal from the optical level determining device. If a problem occurs in the light transmitting element of the optical transmission device, decrease of output level of the optical signal is detected by the optical level determining device, and the light output stopping circuit completely stops output of optical signals from the light transmitting element.

However, in the above.mentioned technique, since the optical transmission device that has caused abnormality in the output of the light transmitting element stops sending signals, the master node does not recognize the abnormality in the slave nodes in the network and cannot cope with the abnormality of the slave nodes.

Another technique, in which the signal is instead verasted around the faulty node is disclosed in EP-A-0 779 718.

Accordingly, it is an objective of the present invention to provide an optical LAN device in which a master node acquires occurrence of an abnormality when an abnormality occurs in a light transmitting portion of a slave node in a network. The present invention also provides a method for detecting abnormality in an optical LAN device.

To achieve the above mentioned objective, the present invention provides the optical LAN device according to claim 1. The device includes a master node; a plurality of slave nodes and a plurality of optical fiber cables for interconnecting the master node and the slave nodes to configure a network. Each node transmits optical signals to the network and receives optical signals from the network. Each node includes: a light transmitting portion for transmitting optical signals to the network; and an abnormality detecting portion. Based on the output level of a received optical signal, the abnormality detecting portion detects decrease in the light intensity of the light transmitting portion of the node that has transmitted the optical signal.

Further, the present invention provides according to claim 5 the method for detecting abnormality in an optical LAN device. The optical LAN device includes a master node and a plurality of slave nodes, which are interconnected by a plurality of optical fiber cables for configuring a network. Each node includes a light transmitting portion. The method includes transmitting optical signals to the network through the light transmitting portion of each node; receiving optical signals from the network by each node; and based on the output level of a received optical signal, detecting, by each node, decrease in the light intensity of the light transmitting portion of the node that has transmitted the optical signal.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic view showing the configuration of an optical LAN device according to one embodiment of the present invention;
Fig. 2 is a circuit diagram showing an O/E converter and E/O converters of each slave node of the device shown in Fig. 1;
Fig. 3 is a flowchart showing the operation of the master node of the device shown in Fig. 1;
Fig. 4 is a flowchart showing the operation of the slave nodes of the device shown in Fig. 1; and
Fig. 5 is a flowchart showing the operation of the slave nodes of the device shown in Fig. 1.

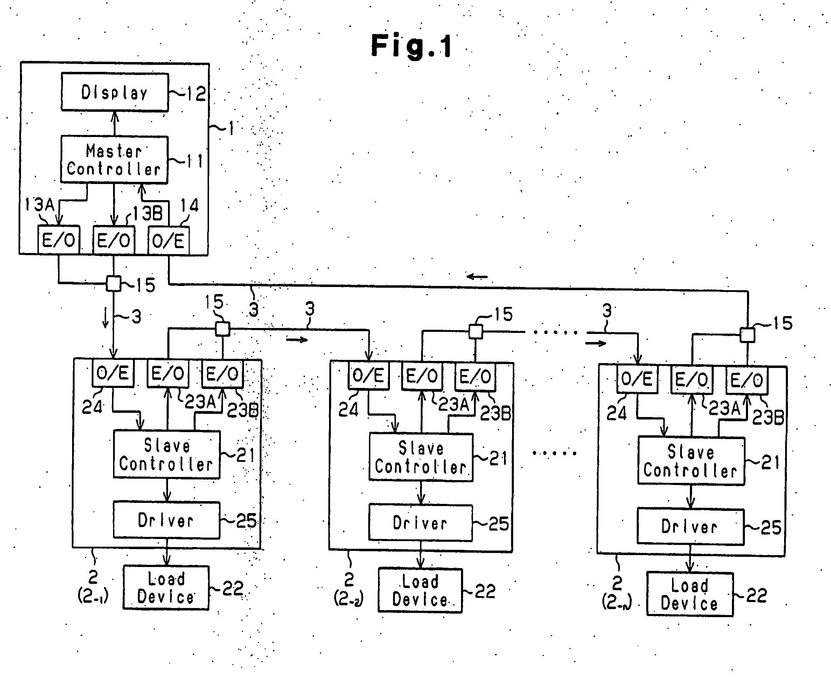

One embodiment of the present invention will now be described with reference to Figs. 1 to 5. As illustrated in Fig. 1, an optical LAN device according to the present invention is a ring type, which is suitable for vehicles. The ring type optical LAN device includes a master node 1 and a plurality of slave nodes 2, or first slave node 2-1 to nth slave node 2-n. The master node 1 and each of the slave nodes 2 are interconnected by optical fiber cables 3, such that a ring type network is established.

The master node 1 is installed in, for example, an instrument panel of a vehicle (not illustrated). The master node 1 includes a master controller 11, which is formed by a microcomputer or the like. The master controller 11 functions as a selecting portion and a changing controller. The master controller 11 includes, for example, a central processing unit (CPU), a read only memory (ROM), and a random access memory (RAM). A display 12 is connected to the master controller 11. The display 12 is exposed on the instrument panel, such that the display 12 is visible to the vehicle operator. The master controller 11 controls the display 12 to indicate the current state of each of the slave nodes 2 by means of characters or codes, when necessary. The display 12 may be replaced by a plurality of indicator lamps provided in the number corresponding to the slave nodes 2. If this is the case, the master controller 11 operates to inform the vehicle operator of the state of any one of the slave nodes 2 or the master controller 11 itself by turning on or flashing the corresponding indicator lamp.

Light transmitting portions, which are E/O converters (electrical-to-optical converters) 13A, 138 in this embodiment, and a light input portion, which is an O/E converter (an optical-to-electrical converter) 14 in this embodiment, are each connected to the master controller 11 by a cable. Each E/O converter 13A, 13B receives an electrical signal sent from the master controller 11 directed to either of the E/O converters 13A, 13B. Each E/O converter 13A, 13B converts the received electrical signal to an optical signal and transmits the optical signal to an optical coupler 15 connected to one of the optical fiber cables 3 connected to the E/O converters 13A, 13B. The optical coupler 15 has two light input portions and one light output portion. The optical coupler 15 transmits an optical signal received from the E/O converter 13A through one of the light input portions or an optical signal received from the E/O converter 13B through the other one of the light input portions to a downstream optical transmission line (network) through the light output portion. The O/E converter 14 receives the optical signal from one of the optical fiber cables 3 that is connected to the O/E converter 14, and converts the optical signal to an electrical signal. The electrical signal is then sent to the master controller 11. The E/O converter 13A is provided for general use and the E/O converter 13B is provided as a spare of the E/O converter 13A.

The slave nodes 2 are installed in various portions of the vehicle. Each of the slave nodes 2 is connected to a load device 22, which is an electrical component. The load devices 22 include different types of electrical actuators such as motors and lamps. In response to an instruction from the master node 1, each slave node 2 actuates the corresponding load device 22. A specific address is given to each of the slave nodes 2-1 to 2-n.

Each slave node 2-1 to 2-n has a slave controller 21, which is formed by a microcomputer or the like. Each slave controller 21 functions as a selecting portion and an informing portion. Each of the slave controllers 21 includes, for example, a central processing unit (CPU), a read only memory (ROM), and a random access memory (RAM). Light transmitting portions, which are E/O converters (electrical-to-optical converters) 23A, 23B in this embodiment, and a light input portion, which is an O/E converter (an optical-to-electrical converter) 24 in this embodiment, are each connected to each slave controller 21 by a cable. The E/O converters 23A, 23B receive an electrical signal from the corresponding slave controller 21 and convert the signal to an optical signal. The optical signal is then transmitted to an optical coupler 15 connected to one of the optical fiber cables 3 connected to the E/O converters 23A, 23B. Each of the O/E converters 24 receives the optical signal from one of the optical fiber cables 3 that is connected to the O/E converter 24, and converts the optical signal to an electrical signal. The electrical signal is then sent to the corresponding slave controller 21. The E/O converter 23A is provided for general use and the E/O converter 23B is provided as a spare of the E/O converter 23A.

Each of the load devices 22 is connected to the corresponding one of the slave controllers 21 by means of a driver (drive circuit) 25. Each slave controller 21 actuates the corresponding load device 22 by controlling the associated driver 25.

In the illustrated optical LAN device, the token passing method is employed as the access control method. More specifically, the master node 1 sends a token signal to the network, or the optical transmission line (network) configured by the optical fiber cables 3, as an instruction signal. The instruction signal includes address information of the slave node 2 to which the signal is addressed, as well as various types of instruction information. The instruction signal sent by the master node 1 is first received by the first slave node 2-1. If the address included in the instruction signal matches that of the first slave node 2-1, the first slave node 2-1 executes an operation according to instruction information of the instruction signal. Also, the first slave node 2-1 adds required return information to the instruction signal. The instruction signal to which the return information is added is then transmitted to the network as a return signal directed to the master node 1. However, if the address included in the instruction signal does not match that of the first slave node 2-1, the first slave node 2-1 simply transmits the instruction signal to the network.

The token signal (the return or instruction signal) transmitted from the first slave node 2-1 to the network is received by the second slave node 2-2. The second slave node 2-2 executes an operation in accordance with the received token signal, like the first slave node 2-1. The token signal is then passed to the subsequent slave node 2. In this manner, the token signal transmitted by the master node 1 as the instruction signal is passed successively from the first slave node 2-1 to the nth slave node 2-n. The final slave node 2-n transmits the token signal to the network, such that the master node 1 receives the token signal as the return signal. Based on the return information in the return signal from the network, the master node 1 acquires the state of the slave node 2 that corresponds to the return signal.

The token signal includes address data, control data, and return data. The address data is information indicating the address of the slave node 2 to which the token signal is addressed. The control data is information indicating instructions to the addressed slave node 2 and includes instruction data related to actuation of the load device 22 (actuation instruction data). The return data is information added to the instruction signal that the slave node 2 has received from the master node 1, that is, the return information. The return data includes the actuation state of the load device 22.

The master node 1 transmits the token signal including the address data and control data to the network as the instruction signal. If the address included in the instruction signal matches the address of any one of the slave nodes 2, the slave node 2 controls the corresponding load device 22 in accordance with the instruction indicated by the control data. If the address included in the instruction signal matches the address of any one of the slave nodes 2, the slave node 2 adds the return data to the instruction signal. The instruction signal to which the return data is added is then transmitted to the optical transmission line (network) as the return signal directed to the master node 1.

Each slave node 2 receives the instruction signal transmitted from the master node 1 as the optical signal from the slave node 2 or the master node 1 that is located upstream in the optical transmission circuit. At this time, the slave node 2 determines whether the output level of the instruction signal is normal regardless of whether the address included in the instruction signal matches that of the slave node 2. The abnormality in the output level of the instruction signal refers to an abnormal decrease in the output level of the optical signal. More specifically, the slave nodes 2-2 to 2-n except the most upstream slave node 2-1 in the optical transmission line (network) determine the abnormal decrease in the light intensity of the E/O converter 23A of the immediately upstream slave node 2-1 to 2-(n-1) in the optical transmission line (network), that is, immediately preceding slave node 2-1 to 2-(n-1) in a direction along which the signal flows. The most upstream slave node 2-1 in the optical transmission line determines the abnormal decrease in the light intensity of the E/O converter 13A of the master node 1. Each slave node 2 converts the optical signal received from the immediately upstream (preceding) slave node 2 or the master node 1 in the optical transmission line to an electrical signal once. The slave node 2 then converts the electrical signal to the optical signal again and transmits the optical signal to the optical transmission line. Therefore, abnormality in the output level of the optical signal transmitted to the optical transmission line from the master node 1 or each slave node 2 can only be detected by the immediately downstream slave node 2, that is, the immediately subsequent slave node 2 in a direction along which the signal flows. Furthermore, abnormality in the output level of the optical signal transmitted from the most downstream slave node 2-n in the optical transmission line can only be detected by the master node 1.

When each slave node 2 detects an abnormality in the output level of the instruction signal received from the immediately upstream slave node 2 or the master node 1 in the optical transmission line, the slave node 2 transmits a token signal to the optical transmission line as an abnormality informing signal to inform the master node 1 of the abnormality in the output level of the instruction signal. The abnormality informing signal includes address data and informing data. The address data is information indicating the address of the master node 1 to which the abnormality informing signal is addressed. The informing data is information indicating the address of the slave node 2 or the master node 1 that has transmitted the abnormal instruction signal, that is, the slave node 2 or the master node 1 that is immediately upstream of the slave node 2 that has transmitted the abnormality informing signal.

The master node 1 receives the abnormality informing signal that is transmitted to the optical transmission line from any one of the slave nodes 2. If the address informed by the abnormality informing signal is the address of any one of the slave nodes 2, the master node 1 transmits, to the optical transmission line, a changing instruction signal.directed to that slave node 2. The changing instruction signal includes address data and changing instruction data. The address data represents the slave node 2 that has been informed of by the abnormality informing signal. The changing instruction data is information that instructs the slave node 2 that has transmitted the abnormal instruction signal to stop using the E/O converter 13A and use the E/O converter 13B. Therefore, upon receipt of the changing instruction signal, the slave node 2 the address of which is specified by the changing instruction signal stops using the E/O converter 23A and starts using the E/O converter 23B.

On the other hand, if the address informed by the abnormality informing signal is the address of the master node 1 itself, the master node 1 stops using the E/O converter 13A and starts using the spare E/O converter 13B to transmit the instruction signal to the optical transmission line (network). Furthermore, when receiving the instruction signal from the most downstream slave node 2-n in the optical transmission line, the master node 1 determines whether the output level of the instruction signal is normal. The abnormal decrease in the output level of the instruction signal is caused by deterioration of the performance (abnormality) of the E/O converter 23A of the most downstream slave node 2-n in the optical transmission line. If the output level of the instruction signal received from the most downstream slave node 2-n is abnormal, the master node 1 transmits, to the optical transmission line, the instruction signal directed to the slave node 2-n indicating to stop using the E/O converter 23A and start using the E/O converter 23B.

Each slave node 2 detects abnormality in the output level of the instruction signal received from the immediately upstream slave node 2 in the optical transmission line by an output level determining circuit 40 incorporated in the corresponding O/E converter 24. Each output level determining circuit 40 and the corresponding slave controller 21 form a signal abnormality detecting portion. The master node 1 detects abnormality in the instruction signal received from the most downstream slave node 2-n in the optical transmission line by the output level determining circuit 40 incorporated in the O/E converter 14.

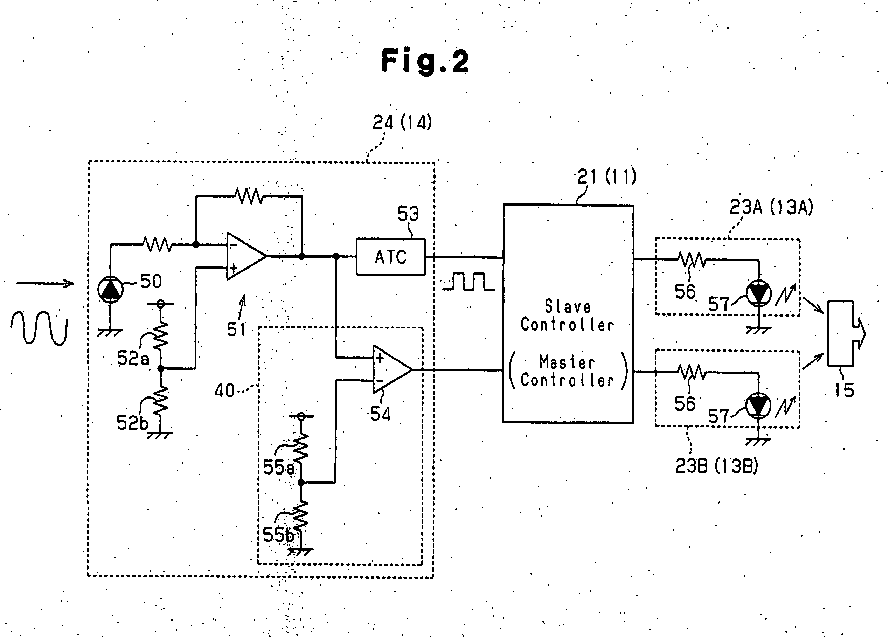

Fig. 2 shows a circuit configuration of the O/E converter 24 and the E/O converters 23A, 23B in each slave node 2. The circuit configuration of the O/E converter 14 and the E/O converters 13A, 13B of the master node 1 is the same as that of the O/E converter 24 and the E/O converters 23A, 23B. The O/E converter 24 is connected to the input of the slave controller 21. The O/E converter 24 includes a photosensitive element, which is a photodetector 50 in this embodiment. The photosensitive element is connected to an inverting input terminal of a differential amplification circuit 51. On the other hand, a noninverting input terminal of the differential amplification circuit 51 receives a divided voltage obtained by dividing the power supply voltage by resistors 52a, 52b as a reference voltage. The differential amplification circuit 51 generates a voltage signal obtained by amplifying the differential voltage between the reference voltage and the output voltage from the photosensitive element by a predetermined gain.

An output terminal of the differential amplification circuit 51 is connected to an input of a known automatic waveform control circuit (hereinafter, referred to as an automatic threshold control (ATC) circuit) 53. The ATC circuit 53 receives a voltage signal from the differential amplification circuit 51 and generates a voltage pulse signal formed of high level and low level of a predetermined voltage from the voltage signal. The ATC circuit 53 then sends the voltage pulse signal to the slave controller 21. That is, the voltage signal sent from the ATC circuit 53 is the token signal received by the O/E converter 24 being changed to an electrical signal.

The output terminal of the differential amplification circuit 51 is also connected to a noninverting input terminal of a comparator 54 of the output level determining circuit 40. An inverting input terminal of the comparator 54 receives a divided voltage obtained by dividing the power supply voltage by resistors 55a, 55b as a predetermined reference voltage. The reference voltage generated by the resistors 55a, 55b corresponds to a determination value for determining whether there is an abnormality in the immediately preceding E/O converter 23A, 13A. The comparator 54 sends a signal of H level to the slave controller 21 when the output level of the voltage signal from the differential amplification circuit 51 exceeds the reference voltage and sends a signal of L level to the slave controller 21 when the output level of the voltage signal from the differential amplification circuit 51 is less than or equal to the reference voltage. The comparator 54 and the resistors 55a, 55b form the output level determining circuit 40.

When the O/E converter 24 receives an optical signal of normal output level, the ATC circuit 53 sends a voltage pulse signal corresponding to the optical signal to the slave controller 21. The comparator 54 also sends the same voltage pulse signal to the slave controller 21. This is because since the output level of the optical signal is normal, the maximum voltage value of the voltage signal from the differential amplification circuit 51 exceeds the reference voltage received by the comparator 54.

On the other hand, when the output level of an optical signal received by the O/E converter 24 is abnormally low, the ATC circuit 53 also sends a voltage pulse signal corresponding to the optical signal to the slave controller 21. However, the voltage pulse signal sent from the comparator 54 to the slave controller 21 disappears. That is, the output from the comparator 54 is constantly L level. This is because since the output level of the optical signal is abnormally decreased, the maximum voltage value of the voltage signal from the differential amplification circuit 51 continues to be less than or equal to the reference voltage received by the comparator 54.

Based on the voltage pulse signal sent from the ATC circuit 53 and the voltage signal sent from the comparator 54, the slave controller 21 monitors whether an abnormal state occurs in which the voltage signal from the comparator 54 is kept at L level although the slave controller 21 receives the voltage pulse signal from the ATC circuit 53 The abnormal state indicates that the output level of the optical signal of the token signal received from the immediately upstream slave node 2 or the master node 1 in the optical transmission line is less than the predetermined reference value.

The outputs of the slave controller 21 are connected to the E/O converters 23A, 23B. The E/O converter 23A includes a resistor 56 and a light emitting diode 57. The light emitting diode 57 is connected to the output of the slave controller 21 via the resistor 56. The E/O converter 23B has the same structure as the E/O converter 23A. The slave controller 21 generates a drive signal corresponding to the token signal based on the voltage pulse signal sent from the ATC circuit 53. The slave controller 21 sends the drive signal to either of the E/O converters 23A, 23B. In the normal state, the slave controller 21 sends the drive signal to the E/O converter 23A. That is, the E/O converter 23A is set to be used in the normal state. On the other hand, when receiving the changing instruction signal indicating to stop using the E/O converter 23A from the master node 1, the slave controller 21 sends the drive signal to the E/O converter 23B instead of the E/O converter 23A. That is, the E/O converter 23B is a spare and is set to be used in an abnormal state. That is, the slave controller 21 functions as the selecting portion, which selects the E/O converter 23B to be used for transmitting an optical signal among the E/O converters 23A, 23B. The optical signal output from the E/O converter 23A or the E/O converter 23B is transmitted to the optical transmission line via the corresponding optical coupler 15.

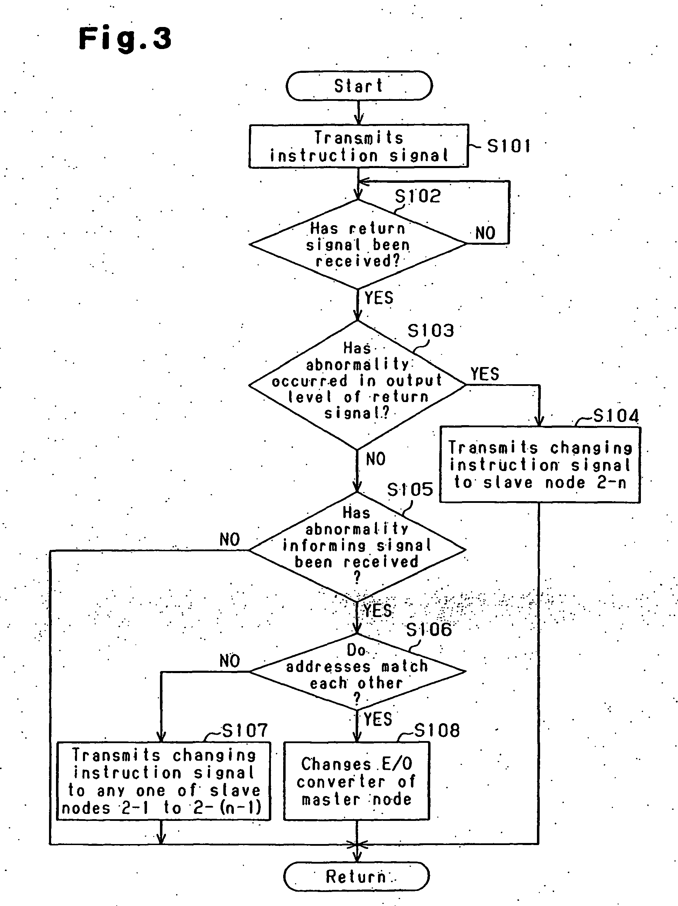

Now, the operation of the master node 1 will be explained with reference to the flowchart of Fig. 3. The operation is executed by the master controller 11 based on the program stored in the ROM of the master controller 11. The program is executed as an interrupt at predetermined time intervals.

In step S101, the master controller 11 transmits an instruction signal to the optical transmission line through the E/O converter 13A. The instruction signal includes the address data representing the address of the slave node 2 to which the instruction signal is addressed, and the control data representing an instruction to the slave node 2.

In step S102, the master controller 11 is held in a waiting state until the master controller 11 receives a return signal from the most downstream slave node 2-n in the optical transmission line through the O/E converter 14. When receiving the return signal from the slave node 2-n, the master controller 11 proceeds to step S103 and determines whether there is an abnormality in the output level of the return signal (optical signal). That is, the master controller 11 determines whether the output level of the return signal (optical signal) is abnormally decreased in accordance with the voltage pulse signal sent from the ATC circuit 53 of the O/E converter 14 and the voltage signal sent from the comparator 54 of the O/E converter 14. If the output level of the return signal is abnormally low, the master controller 11 determines that the light intensity of the light emitting diode 57 of the E/O converter 23A in the slave node 2-n is decreased. The light intensity of the light emitting diode 57 is decreased due to deterioration of the light emitting diode 57. The master controller 11 proceeds to step S104 and transmits a changing instruction signal directed to the slave node 2-n to the optical transmission line indicating to stop using the E/O converter 23A and start using the E/O converter 23B. The master controller 11 then ends the process. That is, if it is determined that an abnormality has occurred in the E/O converter 23A of the slave node 2-n, the master controller 11 transmits a changing instruction signal to the slave node 2-n instructing the slave node 2-n to change the light transmitting portion to be used for transmitting an optical signal from the E/O converter 23A to the E/O converter 23B that is in a normal state.

On the other hand, if there is no abnormality in the output level of the instruction signal in step S103, the master controller 11 determines that there is no abnormal decrease in the E/O converter 23A of the slave node 2-n. The master controller 11 thus proceeds to step S105 and determines whether the master controller 11 has received an abnormality informing signal transmitted to the optical transmission line from any one of the slave nodes 2-2 to 2-n. If the master controller 11 receives the abnormality informing signal, the master controller 11 proceeds to step S106 and determines whether the address specified by the informing data of the abnormality informing signal matches that of the master node 1. If the addresses do not match, the master controller 11 proceeds to step S107 and transmits, to the optical transmission line, a changing instruction signal directed to any one of the slave node 2-1 to 2-(n-1) that corresponds to the address indicated by the informing data in the abnormality informing signal. That is, if it is determined that an abnormality has occurred in the E/O converter 23A of any one of the slave nodes 2-1 to 2-(n-1), the master controller 11 transmits a changing instruction signal to the corresponding slave node 2-1 to 2-(n-1) instructing the slave node 2-1 to 2-(n-1) to change the light transmitting portion to be used for transmitting an optical signal from the E/O converter 23A to the E/O converter 23B that is in a normal state.

On the other hand, if the addresses match each other, that is, if the master controller 11 receives an abnormality informing signal transmitted from the slave node 2-1, the master controller 11 proceeds to step S108. At step S108, the master controller 11 stops using the E/O converter 13A and starts using the spare E/O converter 13B. The procedure is then suspended. That is, the master controller 11 functions as the selecting portion, which selects the E/O converter 13B to be used for transmitting an optical signal among the E/O converters 13A, 13B. In other words, if it is determined that an abnormality has occurred in the E/O converter 13A of the master node 1, the master controller 11 changes the light transmitting portion to be used for transmitting an optical signal from the E/O converter 13A to the E/O converter 13B that is in a normal state. The master controller 11 controls the display 12 to indicate the occurrence of the abnormality in the optical LAN device when stopping to use the E/O converter 23A of any one of the slave nodes 2 or when stopping to use the E/O converter 13A of the master controller 11. If the master controller 11 does not receive the abnormality informing signal in step S105, the master controller 11 suspends the process without transmitting the changing instruction signal.

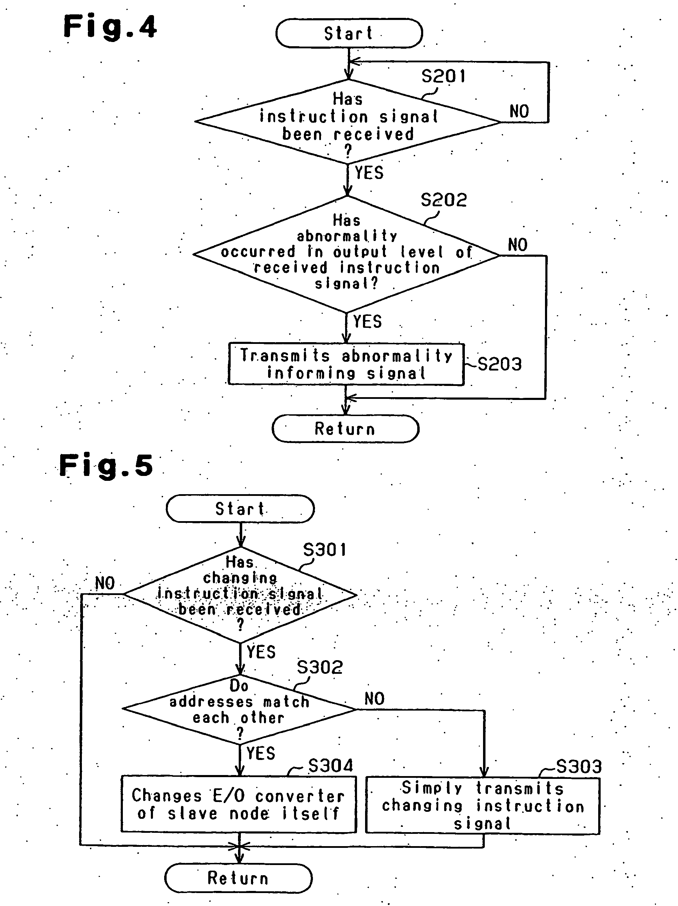

Hereafter, the operation of each of the slave nodes 2 will be explained with reference to the flowchart of Fig. 4. The operation is executed by the slave controller 21 based on the program stored in the ROM of the slave controller 21. The program is executed as an interrupt at predetermined time intervals.

In step S201, the slave controller 21 is held in a waiting state until the slave controller 21 receives an instruction signal from the optical transmission line through the O/E converter 24. When receiving the instruction signal, the slave controller 21 proceeds to step S202 and determines whether there is an abnormality in the output level of the instruction signal (optical signal). That is, the slave controller 21 determines whether the output level of the optical signal of the instruction signal is abnormally decreased in accordance with the voltage pulse signal sent from the ATC circuit 53 of the O/E converter 24 and the voltage signal sent from the comparator 54 of the O/E converter 24. If there is no abnormality in the output level of the instruction signal, the slave controller 21 determines that there is no abnormality in the optical signal sent from the E/O converter 13A of the immediately upstream master node 1 or the E/O converter 23A of the immediately upstream slave node 2 in the optical transmission line. The procedure is then suspended.

On the other hand, if it is determined that the output level of the instruction signal is abnormally low in step S202, the slave controller 21 determines that there is an abnormality in the optical signal sent from the immediately upstream E/O converter 13A or the E/O converter 23A. More specifically, the slave controller 21 of the slave node 2-1 proceeds to step S203 and transmits, to the optical transmission line, an abnormality informing signal directed to the master node 1. The abnormality informing signal includes informing data indicating that the output level of the optical signal generated by the E/O converter 13A of the master node 1 is abnormally low and address data of the master node 1. The procedure is then suspended. Alternatively, in step S203, the slave controller 21 of the slave node 2-2 to 2-n transmits, to the optical transmission line, an abnormality informing signal directed to the master node 1. The abnormality informing signal includes informing data indicating that the output level of the optical signal generated by the immediately upstream E/O converter 23A is abnormally low and address data of the immediately upstream slave node 2-1 to 2-(n-1).

Hereafter, another operation of each of the slave nodes 2 will be explained with reference to the flowchart of Fig. 5. The operation is executed by the slave controller 21 based on the program stored in the ROM of the slave controller 21. The program is executed as an interrupt at predetermined time intervals.

In step S301, the slave controller 21 is held in a waiting state until the slave controller 21 receives a changing instruction signal from the optical transmission line through the O/E converter 24. If the slave controller 21 receives the changing instruction signal, the procedure proceeds to step S302. That is, the slave controller 21 determines whether the address represented by the address data of the changing instruction signal matches that of the slave controller 21. If the addresses do not match, the slave controller 21 proceeds to step S303 and simply transmits the changing instruction signal to the optical transmission line through the E/O converter 23A. The procedure is then suspended. In contrast, if the addresses match each other, the slave controller proceeds to step S304.

In step S304, the slave controller 21 changes to use the E/O converter 23B instead of the E/O converter 23A when transmitting the instruction signal, the abnormality informing signal, or the changing instruction signal received from the optical transmission line to the optical transmission line again. The procedure is then suspended.

This embodiment provides the following advantages.
(1) The slave controller 21 of each slave node 2 determines whether the output level of the optical signal received from the immediately upstream slave node 2 or the master node 1 in the optical transmission line exceeds the predetermined reference value. Therefore, the slave node 2 with no abnormality in the output level of the optical signal detects the abnormality in the output level of the optical signal transmitted from the master node 1 or the immediately upstream slave node 2. The master node 1 thus acquires the abnormality in the optical signal transmitted from the slave nodes 2.
(2) The master node 1 and each slave node 2 include spare E/O converter 13B, 23B in addition to the normally used E/O converter 13A, 23A, respectively. The master node 1 and each slave node 2 changes to use the spare E/O converter 13B, 23B when the light intensity of its own E/O converter 13A, 23A is abnormally decreased. Therefore, even if the light intensity of the light emitting diode 57 of the E/O converter 13A of the master node 1 or the light emitting diode 57 of the E/O converters 23A of any one of the slave nodes 2 is abnormally decreased, the function of the optical LAN device is maintained. This improves the reliability of the optical LAN device. Even if the E/O converter 13A of the master node 1 or the E/O converter 23A of any one of the slave nodes 2 deteriorates, the E/O converter 13A or the E/O converter 23A need not be exchanged immediately. This facilitates the maintenance of the optical LAN device. Since the deterioration of the E/O converter 13A of the master node 1 or the E/O converter 23A of any one of the slave nodes 2 is recognized via the display 12, the E/O converter 13A or the E/O converter 23A can be exchanged when necessary.
(3) The output level determining circuit 40 is integrally incorporated in the O/E converter 14, 24. This is advantageous in simplifying or miniaturizing the structure of the master node 1 or the slave nodes 2.

The invention may be embodied in the following forms.

The slave nodes 2 or the master node 1 may include two or more spare E/O converters. In this case, the spare E/O converters are sequentially changed each time the light intensity of the currently used E/O converter is abnormally decreased.

The optical LAN device according to the present invention may be used in situations other than use in vehicles.

The optical LAN device according to the present invention may be applied to any optical LAN devices other than ring type optical LAN device. For example, the optical LAN device may be applied to a star type optical LAN device in which the master node 1 is directly connected to the slave nodes 2 with optical fiber cables. In this case, each slave node 2 detects decrease in the light intensity of the light emitting diode 57 of the E/O converter 13A of the master node 1 based on the output level of the optical signal received from the master node 1. Also, the master node 1 detects decrease in the light intensity of the light emitting diode 57 of the E/O converter 23A of each slave node 2 based on the output level of the optical signal received from the slave node 2.

The present examples and embodiments are to be considered as illustrative and not restrictive and the invention is not to be limited to the details given herein, but my be modified within the scope of the appended claims

## Claims

1. An optical LAN comprising: a master node (1); a plurality of slave nodes (2) and a plurality of optical fiber cables (3) for interconnecting the master node (1) and the slave nodes (2) to configure said network, and each node (1, 2) transmits optical signals to the network and receives optical signals from the network, wherein each node (1, 2) includes: a first light transmitting portion (13A, 13B, 23A, 23B) for transmitting optical signals to the network, and an abnormality detecting portion (21,40; 11,40), wherein, based on the output level of a received optical signal, the abnormality detecting portion (21,40; 11,40) detects decrease in the light intensity of the light transmitting portion (13A, 13B, 23A, 23B) of the node (1, 2) that has transmitted the optical signal, the optical LAN network being **characterized in that** each node (1, 2) includes: a plurality of light transmitting portions (13A, 13B, 23A, 23B), said first light transmitting portion (13A, 13B, 23A, 23B) being one of the plurality of light transmitting portions (13A, 13B, 23A, 23B); and a selecting portion (11, 21) for selecting the light transmitting portion (13A, 13B, 23A, 23B) to be used for transmitting optical signals among the light transmitting portions (13A, 13B, 23A, 23B).

2. The optical LAN according to claim 1, **characterized in that** the network is ring type, wherein each node (1, 2) has a specific address, and wherein each slave node (2) includes an informing portion (21), and when an abnormality is detected in any one of the light transmitting portions (13A, 13B, 23A, 23B), the informing portion (21) transmits an abnormality informing signal to the master node (1) indicating the address of the node (1, 2) that has the light transmitting portion (13A, 13B, 23A, 23B) in which the abnormality has been detected.

3. The optical LAN according to claim 2, **characterized in that** the master node (1) includes a changing controller (11), wherein the changing controller (11) determines the node (1, 2) that has the light transmitting portion (13A, 13B, 23A, 23B) in which the abnormality has occurred based on the abnormality informing signal; wherein, when it is determined that the abnormality has occurred in one of the light transmitting portions (13A, 13B) of the master node (1), the changing controller (11) changes the light transmitting portion (13A, 13B) to be used to transmit optical signals to the light transmitting portion (13A, 13B) that is in a normal state; and wherein, when it is determined that the abnormality has occurred in one of the light transmitting portions (23A, 23B) of one of the slave nodes (2), the changing controller (11) transmits, to the slave node (2), a changing instruction signal for causing the light transmitting portion (23A, 23B) to be used for transmitting optical signals to be changed to the light transmitting portion (23A, 23B) that is in a normal state.

4. The optical LAN according to claim 3, **characterized in that** the selecting portion (21) of the slave node (2) selects the light transmitting portion (23A, 238) based on the changing instruction signal.

5. A method for detecting abnormality in an optical LAN wherein the optical LAN network includes a master node (1) and a plurality of slave nodes (2), which are interconnected by a plurality of optical fiber cables (3) for configuring said network, each node (1, 2) including a first light transmitting portion (13A, 138, 23A, 23B), the method comprising: transmitting optical signals to the network through the light transmitting portion (13A, 13B, 23A, 23B) of each node (1, 2); receiving optical signals from the network by each node (1, 2), and based on the output level of a received optical signal, detecting, by each node (1, 2), decrease in the light intensity of the light transmitting portion (13A, 13B, 23A, 23B) of the node (1, 2) that has transmitted the optical signal, the method being **characterized in that** each node (1, 2) includes a plurality of light transmitting portions (13A, 13B, 23A, 23B), said first light transmitting portion (13A, 13B, 23A, 23B) being one of the plurality of light transmitting portions (13A, 13B, 23A, 23B), the method further comprising selecting the light transmitting portion (13A, 13B, 23A, 23B) to be used for transmitting optical signals among the light transmitting portions (13A, 13B, 23A, 23B).

## Patentansprüche

1. Optisches LAN mit einem Master-Knoten (1); mehreren Slave-Knoten (2) und mehreren Glasfaserkabeln (3) zum Verbinden des Master-Knotens (1) mit den Slave-Knoten (2), um das Netzwerk zu bilden, wobei jeder Knoten (1, 2) optische Signale an das Netzwerk sendet und vom Netzwerk empfängt und jeder Knoten (1, 2) umfaßt: einen ersten lichtsendenden Abschnitt (13A, 13B, 23A, 23B) zum Senden optischer Signale an das Netzwerk und einen Störungsdetektionsabschnitt (21,40; 11,40), wobei der Störungsdetektionsabschnitt (21,40; 11,40) anhand des Ausgabepegels eines empfangenen optischen Signals eine Verminderung der Lichtintensität des lichtsendenden Abschnittes (13A, 13B, 23A, 23B) des Knotens (1, 2), der das optische Signal gesendet hat, detektiert, wobei das optische LAN **dadurch gekennzeichnet ist, daß** jeder Knoten (1, 2) mehrere lichtsendende Abschnitte (13A, 13B, 23A, 23B), wobei der erste lichtsendende Abschnitt (13A, 13B, 23A, 23B) einer der mehreren lichtsendenden Abschnitte (13A, 13B, 23A, 23B) ist, und einen Auswahlabschnitt (11, 21) umfaßt, um denjenigen der lichtsendenden Abschnitte (13A, 13B, 23A, 23B) auszuwählen, der zum Senden von optischen Signalen verwendet werden soll.

2. Optisches LAN nach Anspruch 1, **dadurch gekennzeichnet, daß** das Netzwerk ein Ring-Netz ist, wobei jeder Knoten (1, 2) eine spezifische Adresse hat und jeder Slave-Knoten (2) einen Meldeabschnitt (21) aufweist, der, wenn in einem der lichtsendenden Abschnitte (13A, 13B, 23A, 23B) eine Störung detektiert wird, an den Master-Knoten (1) ein Störungsmeldesignal sendet, das die Adresse des Knotens (1, 2) angibt, der den lichtsendenden Abschnitt (13A, 13B, 23A, 23B) aufweist, in dem die Störung detektiert wurde.

3. Optisches LAN nach Anspruch 2, **dadurch gekennzeichnet, daß** der Master-Knoten (1) einen Umschalt-Controller (11) umfaßt, der den Knoten (1, 2), welcher den lichtsendenden Abschnitt (13A, 13B, 23A, 23B) aufweist, in dem die Störung auftrat, anhand des Störungsmeldesignals bestimmt; wobei, wenn festgestellt wird, daß die Störung in einem der lichtsendenden Abschnitte (13A, 13B) des Master-Knotens (1) auftrat, der Umschalt-Controller (11) von dem lichtsendenden Abschnitt (13A, 13B), der zum Senden optischer Signale verwendet werden sollte, zu dem lichtsendenden Abschnitt (13A, 13B) umschaltet, der sich in einem Normalzustand befindet; und wobei der Umschalt-Controller (11), wenn festgestellt wird, daß die Störung in einem der lichtsendenden Abschnitte (23A, 23B) eines der Slave-Knoten (2) auftrat, an den Slave-Knoten (2) ein Umschaltbefehlssignal sendet, um den vom lichtsendenden Abschnitt (23A, 23B), der zum Senden optischer Signale verwendet wird, auf den lichtsendenden Abschnitt (23A, 23B), der sich in einem Normalzustand befindet, umzuschalten.

4. Optisches LAN nach Anspruch 3, **dadurch gekennzeichnet, daß** der Auswahlabschnitt (21) des Slave-Knotens (2) den lichtsendenden Abschnitt (23A, 23B) aufgrund des Umschaltbefehlssignals wählt.

5. Verfahren zum Detektieren einer Störung in einem optischen LAN, wobei das optische LAN einen Master-Knoten (1) und mehrere Slave-Knoten (2) umfaßt, die über mehrere Glasfaserkabel (3) miteinander verbunden sind, um das Netzwerk zu bilden, wobei jeder Knoten (1, 2) einen ersten lichtsendenden Abschnitt (13A, 13B, 23A, 23B) aufweist und das Verfahren die Schritte umfaßt: Senden optischer Signale an das Netzwerk durch den lichtsendenden Abschnitt (13A, 13B, 23A, 23B) jedes Knotens (1, 2); Empfangen optischer Signale vom Netzwerk über jeden Knoten (1, 2) und Detektieren einer Verminderung der Lichtintensität im lichtsendenden Abschnitt (13A, 13B, 23A, 23B) des Knotens (1, 2), der das optische Signal gesendet hat, anhand des Ausgabepegels eines empfangenen optischen Signals über jeden Knoten (1, 2), wobei das Verfahren **dadurch gekennzeichnet ist, daß** jeder Knoten (1, 2) mehrere lichtsendende Abschnitte (13A, 13B, 23A, 23B) umfaßt, wobei der erste lichtsendende Abschnitt (13A, 13B, 23A, 23B) einer der mehreren lichtsendenden Abschnitte (13A, 13B, 23A, 23B) ist, und das Verfahren ferner das Auswählen desjenigen der lichtsendenden Abschnitte (13A, 13B, 23A, 23B), der zum Senden optischer Signale verwendet werden soll, umfaßt.

## Revendications

1. Réseau optique local (LAN) comportant: un noeud maître (1); une pluralité de noeuds esclaves (2) et une pluralité de câbles en fibre optique (3) pour interconnecter le noeud maître (1) et le noeud esclave (2) pour configurer ledit réseau, et chaque noeud (1, 2) transmet des signaux optiques au réseau et reçoit des signaux optiques du réseau, dans lequel chaque noeud (1, 2) comporte : une première partie de transmission de la lumière (13A, 13B, 23A, 23B) pour la transmission de signaux optiques au réseau, et une partie de détection d'anomalies (21, 40 ; 11, 40), dans lequel, sur la base du niveau de sortie d'un signal optique reçu, la partie de détection d'anomalies (21,40 ; 11, 40) détecte une diminution de l'intensité de la lumière de la partie de transmission de la lumière (13A, 13B, 23A, 23B) du noeud (1, 2) qui a transmis le signal optique, le LAN optique étant **caractérisé en ce que** chaque noeud (1, 2) comporte : une pluralité de parties de transmission de la lumière (13A, 13B, 23A, 23B), ladite première partie de transmission de la lumière (13A, 13B, 23A, 23B) étant l'une de la pluralité des parties de transmission de la lumière (13A, 13B, 23A, 23B) ; et une partie de sélection (11, 21) pour sélectionner la partie de transmission de la lumière (13A, 13B, 23A, 23B) à utiliser pour la transmission de signaux optiques sur les parties de transmission de la lumière (13A, 13B, 23A, 23B).

2. Réseau optique local (LAN) selon la revendication 1, **caractérisé en ce que** le réseau est de type en anneau, dans lequel chaque noeud (1, 2) a une adresse spécifique, et dans lequel chaque noeud esclave (2) comporte une partie d'indication (21), et lorsqu'une anomalie est détectée dans l'une quelconque des parties de transmission de la lumière (13A, 13B, 23A, 23B), la partie d'indication (21) transmet un signal d'indication d'anomalie au noeud maître (1) indiquant l'adresse du noeud (1, 2) qui présente la partie de transmission de la lumière (13A, 13B, 23A, 23B), où l'anomalie a été détectée.

3. Réseau optique local (LAN) selon la revendication 2, **caractérisé en ce que** le noeud maître (1) comporte un contrôleur de changement (11), dans lequel le contrôleur de changement (11) détermine le noeud (1, 2) qui présente la partie de transmission de la lumière (13A, 13B, 23A, 23B), où l'anomalie a été occasionnée sur la base du signal d'indication d'anomalie ; dans lequel, lorsqu'il est déterminé que l'anomalie a été rencontrée dans l'une des parties de transmission de la lumière (13A, 13B) du noeud maître (1), le contrôleur de changement (11) modifie la partie de transmission de la lumière (13A, 13B) à utiliser pour transmettre des signaux optiques à la partie de transmission de la lumière (13A, 13B) qui est à un état normal ; et dans lequel, lorsqu'il est déterminé que l'anomalie a été rencontrée dans l'une des parties de transmission de la lumière (23A, 23B) de l'un des noeuds esclaves (2), le contrôleur de changement (11) transmet au noeud esclave (2) un signal d'instruction de changement pour faire en sorte que la partie de transmission de la lumière (23A, 23B) à utiliser pour la transmission de signaux optiques soit remplacée par la partie de transmission de la lumière (23A, 23B) qui est à un état normal.

4. Réseau optique local (LAN) selon la revendication 3, **caractérisé en ce que** la partie de sélection (21) du noeud esclave (2) sélectionne la partie de transmission de la lumière (23A, 23B) sur la base du signal d'instruction de changement.

5. Procédé en vue de détecter une anomalie dans un réseau optique local (LAN) dans lequel le LAN optique comporte un noeud maître (1) et une pluralité de noeuds esclaves (2), qui sont interconnectés par une pluralité de câbles en fibre optique (3) en vue de la configuration du réseau et, chaque noeud (1, 2) comportant une première partie de transmission de la lumière (13A, 13B, 23A, 23B), le procédé comportant les étapes consistant à : transmettre des signaux optiques au réseau via la partie de transmission de la lumière (13A, 13B, 23A, 23B) de chaque noeud (1, 2) ; recevoir des signaux optiques du réseau par chaque noeud (1, 2), et sur la base du niveau de sortie d'un signal optique reçu, détecter, par chaque noeud (1, 2), une diminution de l'intensité de la lumière de la partie de transmission de la lumière (13A, 13B, 23A, 23B) du noeud (1, 2) qui a transmis le signal optique, le procédé étant **caractérisé en ce que** chaque noeud (1, 2) comporte une pluralité de parties de transmission de la lumière (13A, 13B, 23A, 23B), ladite première partie de transmission de la lumière (13A, 13B, 23A, 23B) étant l'une de la pluralité des parties de transmission de la lumière (13A, 13B, 23A, 23B), le procédé comportant en outre l'étape consistant à sélectionner la partie de transmission de la lumière (13A, 13B, 23A, 23B) à utiliser pour la transmission de signaux optiques dans les parties de transmission de la lumière (13A, 13B, 23A, 23B).
